# DEMANDE DE BREVET EUROPEEN

(11) **EP 4 653 413 A1**
(43) Date de publication de la demande: **26.11.2025**
(21) Numéro de dépôt: 24177175.7
(22) Date de dépôt: 21.05.2024
(51) Int. Cl.: C05G 3/80

(54) **COMPOSITION FERTILISANTE HYDRO-RETENTRICE**

(71) Demandeur: Raincatcher Technologies Trading DMCC, Dubai (AE)
(72) Inventeur: LE COZ, Yann, 29800 Pencran (FR); BOUXOM, Franck, 86512 Ras AL Khaimah (AE)
(74) Mandataire: Tranvouez, Edern Morgan

(57) **Abrégé**

L'invention concerne une composition fertilisante hydro-rétentrice destinée à améliorer l'efficacité de la fertilisation dans le domaine agricole. Plus particulièrement, l'invention repose sur l'utilisation d'un hydrogel spécifique composé d'un copolymère de polyacrylate et d'acrylamides de potassium, en combinaison avec au moins un engrais azoté pur.

## Description

### Domaine technique :

La présente invention concerne le domaine des compositions fertilisantes hydro-rétentrices utilisées pour promouvoir la croissance des plantes. Plus particulièrement, l'invention se rapporte à une composition comprenant un hydrogel spécifique associé à un ou plusieurs engrais azotés purs.

### Etat de l'art :

Les hydrogels sont des produits rétenteurs d'eaux qui ont commencés à être développés dans les années 1960 par le ministère de l'Agriculture des Etats-Unis. Le but de ce programme étatique était d'inventer un produit pour doper les productions agricoles et résister aux périodes de sécheresses. A l'époque, ces produits à base de sodium étaient chers, toxiques pour les sols et avaient un cycle de vie réduit. Ils ont été utilisés dans les couches pour bébés et dans certaines applications médicales mais n'ont pu être utilisés dans le domaine agricole.

Les hydrogels récents sont généralement composés de Polyacrylate d'acrylamides de Potassium {-CH2-CH(CO2K)-} et le produit final se présente sous la forme d'un granulé que l'on peut trouver sous différentes mailles (MESH) et qui se dépose sous la racine du végétal lors de la plantation. Lors des phases d'irrigation, la poudre se transforme en une masse gélatineuse qui augmente jusqu'à 300 fois de volume et qui n'est ni plus ni moins que de l'eau solide dont le cycle poudre - gel est réversible.

L'hydrogel ou son dérivé fonctionne donc comme une éponge que l'on déposerait sous la racine des végétaux. Il permet de retenir 95% des eaux d'arrosage et permet donc de les nourrir de manières proportionnées à leurs attentes. Les plantes se développent de manière harmonieuse, sans stress hydrique, tout en permettant des économies non négligeables en termes d'arrosage.

En revanche, l'hydrogel pur n'est pas un engrais et les connaissances actuelles se heurtent à des problèmes d'incompatibilités entre les hydrogels et les engrais communément utilisés dans l'agriculture.

Il existe donc un besoin pour une composition à double effet, permettant à la fois une rétention d'eau et une fertilisation concomitante.

### Description de l'invention :

L'invention repose sur une composition fertilisante hydro-rétentrice comprenant un hydrogel comprenant un copolymère de polyacrylate et d'acrylamides de potassium et au moins un engrais azoté pur. Les inventeurs ont découvert de manière surprenante que cet hydrogel est remarquablement et spécifiquement compatible avec les engrais azotés purs.

Le copolymère de polyacrylate et d'acrylamides de potassium, en raison de sa structure unique, présente des propriétés hydro-rétentrices exceptionnelles, ce qui signifie qu'il a la capacité d'absorber et de retenir de grandes quantités d'eau. Cette caractéristique permet d'assurer une libération progressive de l'azote dans le sol, améliorant ainsi l'efficacité de l'engrais tout en minimisant les pertes par lessivage.

Les inventeurs ont découvert de manière surprenante la compatibilité exclusive de cet hydrogel avec les engrais azotés purs. Les résultats ont montré que cette combinaison spécifique permet une synergie qui favorise une absorption optimale de l'azote par les plantes, réduisant ainsi le gaspillage d'engrais et les impacts environnementaux associés (voir exemples).

Selon certains modes de réalisation, la composition comprend entre 60 et 95%, de préférence entre 70 et 95%, plus préférentiellement entre 80 et 95% en poids d'un hydrogel comprenant un copolymère de polyacrylate et d'acrylamides de potassium ; et entre 5 et 40%, de préférence entre 5 et 20%, plus préférentiellement entre 5 et 10% en poids d'au moins un engrais azoté pur.

Selon certains modes de réalisation, le au moins un engrais azoté pur est sélectionné dans le groupe comprenant l'urée, le sulfate d'ammonium, Nitrate d'ammonium, Nitrate de sodium, Ammoniac anhydre, Nitrate d'urée, Urée formaldéhyde, Ammoniac liquide (solution d'ammoniac dans l'eau), Anhydride ammoniacal, ou un mélange de ceux-ci.

Selon certains modes de réalisation, la composition comprend moins de 1% en poids d'engrais phosphatés et/ou d'engrais potassiques, de préférence ne comprend pas d'engrais phosphatés et/ou d'engrais potassiques. Ce mode de réalisation permet d'éviter les incompatibilités observées entre l'hydrogel et les engrais phosphatés ou potassiques.

Selon certains modes de réalisation, l'hydrogel et/ou l'engrais azoté peut être présenté sous forme de granulés, facilitant ainsi son application dans le sol. Les granulés peuvent être dimensionnés entre 0,5 et 5 mm, de préférence entre 0,5 et 3 mm, plus préférentiellement entre 0,8 et 2 mm pour assurer une distribution homogène dans le sol et une absorption efficace par les racines des plantes.

Selon certains modes de réalisation, les granulés d'hydrogel et d'au moins un engrais azoté ont une granulométrie égale ou une granulométrie qui diffère de moins de 10%, de préférence de moins de 5%, plus préférentiellement de moins de 1%. Cette uniformité facilite la manipulation et l'application de la composition.

Dans certains modes de réalisation, l'hydrogel comprend en outre un agent mouillant pour améliorer la pénétration de la composition dans le sol. L'ajout d'un agent mouillant favorise une répartition uniforme de la composition dans le sol, assurant ainsi une absorption optimale des nutriments par les racines des plantes.

L'agent mouillant peut être sélectionné dans la liste comprenant les alkylaryl sulfonates, les alkylarylethoxylates, les polyoxyéthylènes, les polyglycols, les alkylphénol éthoxylates, les alcools gras éthoxylés, les esters d'acides gras éthoxylés, les glycérides éthoxylés, les sucres éthoxylés, les silicones modifiés, les ammonium quaternaires, les phospholipides, les copolymères d'oxyde d'éthylène et de propylène, et leurs mélanges.

Dans certains modes de réalisation, la composition selon l'invention est caractérisée en ce que l'hydrogel est fonctionnalisé avec des oligo-éléments pour fournir des éléments nutritifs additionnels aux plantes. L'ajout d'oligo-éléments essentiels renforce la valeur nutritionnelle de la composition, contribuant ainsi à une croissance plus saine des plantes.

Les oligo-éléments peuvent être sélectionnés dans la liste comprenant le zinc, le fer, le cuivre, le manganèse, le molybdène, le bore, le nickel, le cobalt, le sélénium, le vanadium, l'aluminium, le silicium, le sodium, le potassium, le magnésium, le calcium, et leurs mélanges.

Dans certains modes de réalisation, la composition selon l'invention est caractérisée en ce que l'hydrogel est dérivé d'une source renouvelable, telle que des matières premières biologiques. Cette approche durable contribue à réduire l'empreinte environnementale de la composition, alignant ainsi l'invention avec des pratiques agricoles respectueuses de l'environnement.

Dans certains modes de réalisation, la composition selon l'invention est caractérisée en ce que l'hydrogel est modifié chimiquement pour améliorer sa stabilité thermique et sa durée de vie dans le sol. La modification chimique de l'hydrogel vise à renforcer sa résistance aux fluctuations de température du sol, assurant ainsi une libération continue et stable des nutriments.

Dans certains modes de réalisation, la composition selon l'invention est caractérisée en ce que l'hydrogel est associé à des bioactivateurs du sol pour promouvoir la santé du sol et la biodisponibilité des nutriments. L'association avec des bioactivateurs renforce les interactions bénéfiques entre la composition et le sol, favorisant ainsi un environnement optimal pour la croissance des plantes.

Les bioactivateurs du sol peuvent être sélectionnés dans la liste comprenant des bactéries fixatrices d'azote, des bactéries nitrifiantes, des mycorhizes, des enzymes du sol, des activateurs microbiens, des extraits de compost, des extraits de fumier, des extraits de vermicompost, des extraits d'algues, des extraits de bactéries du sol, des extraits de champignons, des extraits de litière forestière, des extraits d'insectes, des extraits d'enzymes, des extraits de rhizosphère, des extraits de plantes couvre-sol, des cultures de bactéries bénéfiques, et leurs mélanges.

Dans certains modes de réalisation, la composition selon l'invention est caractérisée en ce que l'hydrogel est fonctionnalisé avec des polymères biodégradables pour une libération contrôlée dans le sol. L'incorporation de polymères biodégradables dans l'hydrogel vise à assurer une libération contrôlée de la composition, avec une dégradation ultérieure respectueuse de l'environnement.

Les polymères biodégradables peuvent être sélectionnés dans la liste comprenant des polyesters, des polyuréthanes, des polysaccharides, le polycaprolactone, le polylactate, le polyhydroxyalcanoate, l'amidon thermoplastique, la cellulose, le polybutylène succinate, le polycaprolactam, le polyacide polylactique, le polyéthylène oxo-biodégradable, les copolymères à base de maïs, les copolymères d'acide polylactique, les copolymères de polyhydroxybutyrate, les copolymères de polyhydroxyvalerate, et leurs mélanges.

Dans certains modes de réalisation, la composition selon l'invention est caractérisée en ce que l'hydrogel est formulé avec des propriétés antifongiques pour protéger les racines des plantes contre les infections fongiques. L'ajout d'antifongiques renforce la résistance des plantes aux infections fongiques, favorisant ainsi une croissance saine.

Les propriétés antifongiques peuvent être obtenues par l'incorporation de composés tels que les fongicides systémiques, les fongicides protecteurs, les fongicides à large spectre, les huiles essentielles antifongiques, les extraits de plantes antifongiques, les sels de cuivre, les sels de zinc, les sels d'argent, les composés azolés, les strobilurines, les pyrimidines, les composés thiocarbamate, les composés organo-étains, les composés phénoliques, les composés pyrrole, les composés morpholine, les composés benzimidazole, les composés triazole, les composés thiazole, les composés carbamate, les composés imidazole, et leurs mélanges.

Dans certains modes de réalisation, la composition selon l'invention est caractérisée en ce que l'hydrogel est doté de propriétés fluorescentes pour surveiller visuellement la distribution de la composition dans le sol. Les propriétés fluorescentes facilitent la surveillance visuelle de la composition, permettant aux agriculteurs de suivre son application et son absorption par les plantes.

Dans certains modes de réalisation, la composition selon l'invention est caractérisée en ce que l'hydrogel est formulé avec des agents bioréactifs pour réguler la libération d'azote en fonction des besoins spécifiques des plantes. Les agents bioréactifs permettent une régulation précise de la libération d'azote en réponse aux conditions du sol, optimisant ainsi l'efficacité de la fertilisation.

Les agents bioréactifs peuvent être sélectionnés dans la liste comprenant des enzymes spécifiques du sol, des bactéries modifiées génétiquement, des substrats microbiens, des coenzymes, des activateurs enzymatiques, des inhibiteurs enzymatiques, des agents de régulation génique, des bactéries productrices d'enzymes, des bactéries fixatrices d'azote génétiquement améliorées, des bactéries nitrifiantes génétiquement améliorées, des levures génétiquement modifiées, des champignons génétiquement modifiés, des algues génétiquement modifiées, des agents de contrôle génétique de la libération d'azote, et leurs mélanges.

Dans certains modes de réalisation, la composition selon l'invention est caractérisée en ce que l'engrais azoté pur est une source d'azote à libération lente sélectionnée dans le groupe comprenant la méthylènediurée, la cyanamide calcique, et l'urée formaldéhyde, et leurs mélanges. Cette sélection précise vise à prolonger la disponibilité de l'azote dans le sol, améliorant ainsi l'efficacité de la fertilisation sur une période prolongée.

La source d'azote à libération lente peut également être sélectionnée dans la liste comprenant la méthylènediurée, la cyanamide calcique, l'urée formaldéhyde, le nitrate d'urée, le sulfate d'ammonium-nitrate, le nitrate d'ammonium-calcium, le polyurée, l'azote encapsulé dans des polymères, les résines urée-formaldéhyde, les complexes azotés organo-minéraux, les engrais à libération contrôlée, les produits à base de méthylène bis(thiocyanate), et leurs mélanges.

Dans certains modes de réalisation, la composition selon l'invention est caractérisée en ce que l'engrais azoté pur est une combinaison d'au moins deux sources d'azote, sélectionnées dans le groupe comprenant l'urée et le sulfate d'ammonium. Cette combinaison spécifique vise à optimiser la libération et l'absorption de l'azote par les plantes, offrant ainsi une approche synergique de la fertilisation.

Dans certains modes de réalisation, la composition selon l'invention est caractérisée en ce que l'engrais azoté pur est combiné à des additifs stimulant la croissance des racines pour renforcer le système racinaire des plantes. Les additifs stimulant la croissance des racines contribuent à un développement racinaire robuste, améliorant ainsi la capacité des plantes à absorber les nutriments du sol.

Les additifs stimulant la croissance des racines peuvent être sélectionnés dans la liste comprenant des auxines, des cytokinines, des acides humiques, des mycorhizes, des stimulants de croissance des racines bactériens, des stimulants de croissance des racines fongiques, des extraits d'algues marines, des extraits de laminaires, des extraits de fulviques, des extraits de radicelles de luzerne, des extraits d'épinards, des extraits de trèfle, des extraits de consoude, des extraits de bardane, des extraits de prêle, des extraits d'ortie, et leurs mélanges.

Dans certains modes de réalisation, la composition selon l'invention est caractérisée en ce que l'engrais azoté pur est enrobé d'une couche protectrice pour réguler la libération d'azote. Cette stratégie de protection vise à contrôler la libération de l'azote, évitant ainsi des pics de libération et optimisant l'absorption par les plantes.

L'enrobage protecteur peut être sélectionné dans la liste comprenant des polymères biodégradables, des résines, des substances naturelles, les polymères PLA (acide polylactique), les polyéthylènes glycols, les cires naturelles, les amidons modifiés, les polyacrylates, les gommes naturelles, les polymères végétaux, les dérivés de cellulose, les huiles végétales, les lipides, les protéines, et leurs mélanges.

Dans certains modes de réalisation, la composition selon l'invention est caractérisée en ce que l'engrais azoté pur est obtenu à partir de déchets organiques recyclés, contribuant ainsi à une approche écologique de la fertilisation.

Dans certains modes de réalisation, la composition selon l'invention est caractérisée en ce que l'engrais azoté pur est traité avec des agents de stabilisation pour prévenir les pertes d'azote par volatilisation. Les agents de stabilisation minimisent les pertes d'azote par volatilisation, garantissant ainsi une utilisation plus efficace de l'azote par les plantes.

Les agents de stabilisation peuvent être sélectionnés dans la liste comprenant les stabilisateurs d'urée, les inhibiteurs de volatilisation d'ammoniac, les nitrification et les inhibiteurs de dénitrification, les polymères protecteurs d'azote, les agents de rétention d'urée, les agents de contrôle de libération d'azote, les agents de protection contre les pertes d'azote par lessivage, les agents de stabilisation microbiens, les agents antioxydants, les agents anti-hydrolyse, les agents de protection contre les pertes d'azote par volatilisation, les agents de protection contre les pertes d'azote par dénitrification, les agents de protection contre les pertes d'azote par lixiviation, les inhibiteurs de nitrification, les inhibiteurs de volatilisation d'urée, et leurs mélanges.

Dans certains modes de réalisation, la composition selon l'invention est caractérisée en ce que l'engrais azoté pur est associé à des agents chélatants pour améliorer la disponibilité des micronutriments dans le sol. Les agents chélatants améliorent la disponibilité des micronutriments, garantissant ainsi une nutrition équilibrée pour les plantes.

Les agents chélatants peuvent être sélectionnés dans la liste comprenant l'EDTA, l'acide citrique, l'acide humique, les polyphosphates, le gluconate de sodium, l'éthylènediamine-N,N'-disuccinate (EDDS), le DTPA (acide diéthylènetriaminepentaacétique), le HEDTA (acide N-(2-hydroxyéthyl)éthylènediamine-N,N',N'-triacétique), le PDTA (acide N,N,N',N'-tétraacétique-1,2-phénylènediamine), le DOTA (1,4,7,10-tétraazacyclododécane-1,4,7,10-tétraacétique), le DCTA (acide diéthylènetriamine-N,N,N',N",N"-pentaacétique), le NTA (acide nitrilotriacétique), le glucoheptonate, l'IDHA (acide 1,2-diaminocyclohexane-N,N,N',N'-tétraacétique), l'acide malique, et leurs mélanges.

Les agents chélatants peuvent également inclure des composés tels que l'acide fulvique, le citrate de sodium, l'acide lactique, l'acide tartrique, le gluconate de fer, le gluconate de cuivre, le gluconate de zinc, le lignosulfonate, l'acide glutamique, l'acide acétique, l'acide ascorbique, l'acide malique, le polyaspartate, le polysaccharide chélatant, le glycolate, le lactate, l'éthylène diamine acétique, le polyacrylate, le glutamate de sodium, et leurs mélanges.

Dans certains modes de réalisation, la composition selon l'invention est caractérisée en ce que l'engrais azoté pur est associé à des agents de rétention d'azote pour minimiser les pertes d'azote par lessivage. Les agents de rétention d'azote réduisent les pertes d'azote par lessivage, contribuant ainsi à une utilisation plus efficace de l'azote dans le sol.

Les agents de rétention d'azote peuvent être sélectionnés dans la liste comprenant les polymères d'urée, les polymères d'ammonium, les polymères de nitrates, les polymères de phosphates, les polymères d'urée-formaldéhyde, les polymères d'acides aminés, les polymères de polyol, les polymères de polyacide, les polymères de polyamide, les polymères de polyamine, les polymères de polyéther, les polymères de polyphosphazène, les polymères de polyoxazoline, les polymères de polyimide, les polymères de polyurée, les polymères de polyéthylène, les polymères de polypropylène, les polymères de polyvinyle, les polymères de polyéthylène glycol, les polymères de polyacrylamide, et leurs mélanges.

Dans certains modes de réalisation, la composition selon l'invention est caractérisée en ce que l'hydrogel et l'engrais azoté pur sont présentés sous forme de microsphères pour une distribution homogène dans le sol. La forme de microsphères facilite la manipulation et assure une répartition uniforme de la composition dans le sol, favorisant ainsi une absorption homogène des nutriments.

Ladite invention comprend également un procédé de fabrication de la composition fertilisante hydro-rétentrice selon l'invention, comprenant les étapes suivantes :
- Fournir un hydrogel comprenant un copolymère de polyacrylate et d'acrylamides de potassium sous forme de granulés de granulométrie comprise entre 0,5 et 5 mm ;
- Fournir au moins un engrais azoté pur comprenant un copolymère de polyacrylate et d'acrylamides de potassium sous forme de granulés de granulométrie comprise entre 0,5 et 5 mm ;
- Mélanger les granulés d'hydrogel et d'au moins un engrais azoté pur.

Selon certains modes de réalisation du procédé, les granulés d'hydrogel et d'au moins un engrais azoté pur sont mélangés pour former un mélange final comprenant : entre 60 et 95%, de préférence entre 70 et 95%, plus préférentiellement entre 80 et 95% en poids d'un hydrogel comprenant un copolymère de polyacrylate et d'acrylamides de potassium ; et entre 5 et 40%, de préférence entre 5 et 20%, plus préférentiellement entre 5 et 10% en poids d'au moins un engrais azoté pur.

Selon un autre aspect de l'invention, la composition peut être utilisée comme produit rétenteur d'eau et fertilisant pour les plantes. Son application offre une libération contrôlée d'azote, améliore la rétention d'eau dans le sol et favorise une croissance saine des plantes.

### Brève description des figures

Figure 1 : Résultats d'une expérience (voir exemple 1) réalisée sur la compatibilité de l'hydrogel selon l'invention avec la plupart des engrais présent sur le marché, plus précisément sur la perte d'efficacité d'absorption de l'hydrogel dans le sol sous l'effet des engrais.
Figure 2 : Résultats d'une expérience (voir exemple 2) réalisée sur la compatibilité de l'hydrogel selon l'invention avec la plupart des engrais présent sur le marché, plus précisément sur la perte d'efficacité d'absorption de l'hydrogel à la surface du sol sous l'effet des engrais.
Figure 3 : Résultats d'une expérience (voir exemple 3) réalisée sur la compatibilité de l'hydrogel selon l'invention avec la plupart des engrais présent sur le marché, plus précisément concernant la perte de masse de l'hydrogel sous l'effet des engrais.

### Exemples :

### Exemple 1 : Compatibilité de l'hydrogel avec les engrais concernant la perte d'absorption dans le sol.

Une expérience a été réalisée sur la compatibilité de l'hydrogel avec la plupart des engrais que l'on peut trouver sur le marché concernant la perte d'absorption de l'hydrogel dans le sol.

L'expérience a consisté à mélanger 5 grammes d'hydrogel avec 3,5 grammes d'engrais (ratio 70/30 qui a été utilisé lors d'une expérimentation locale sur des blés d'hiver) dans un sol sableux et de vérifier l'absorption des nodules de gel en mesurant l'eau résiduelle.

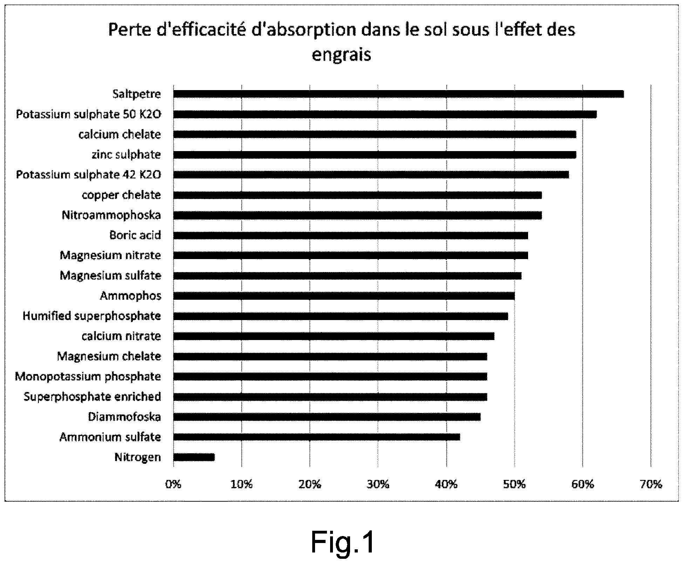

Les résultats sont synthétisés dans la figure 1.

Comme observé dans la figure 1, tous les engrais du marché entrainent entre 42% et 66% de perte d'absorption de l'hydrogel sauf l'azote pur qui n'entraine une perte que de l'ordre de 8%.

### Exemple 2 : Compatibilité de l'hydrogel avec les engrais concernant la perte d'absorption sur le sol.

Une expérience a été réalisée sur la compatibilité de l'hydrogel avec la plupart des engrais que l'on peut trouver sur le marché concernant la perte d'absorption de l'hydrogel sur le sol.

L'expérience a consisté à mélanger 4 grammes d'hydrogel avec 2,8 grammes d'engrais et de les faire gonfler à l'air libre pour mesurer le poids du gel résiduel :

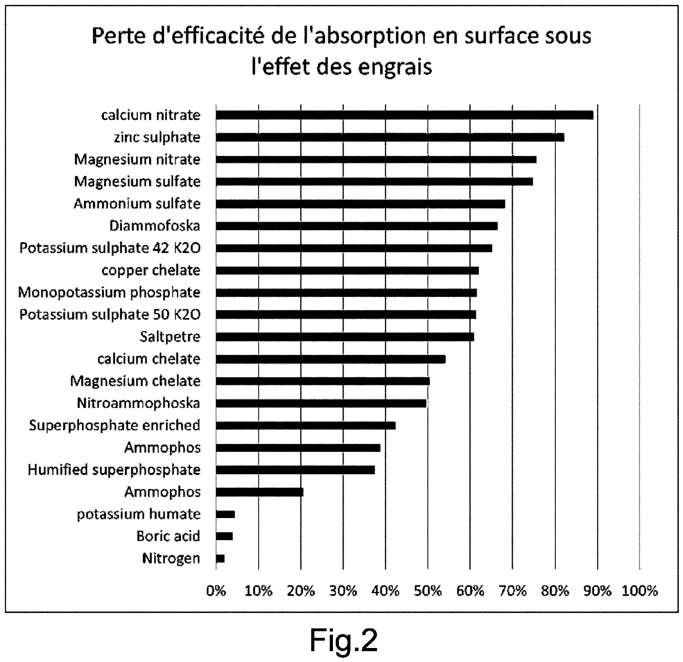

Les résultats sont synthétisés dans la figure 2.

Comme observé dans la figure 2, tous les engrais du marché entrainent entre 20% et 90% de perte d'absorption de l'hydrogel sur le sol sauf l'humate de potassium (environ 5%), l'acide borique (environ 5%) et surtout l'azote pur qui n'entraine une perte que de l'ordre d'environ 2%.

### Exemple 3 : Compatibilité de l'hydrogel avec les engrais concernant la perte de masse de l'hydrogel

Une expérience a été réalisée sur la compatibilité de l'hydrogel avec la plupart des engrais que l'on peut trouver sur le marché concernant la perte de masse de l'hydrogel.

L'expérience a consisté à ajouter 2,8 grammes d'engrais sur 4 grammes de cristaux gonflés en gel pour observer un éventuel « dégonflement » du gel.

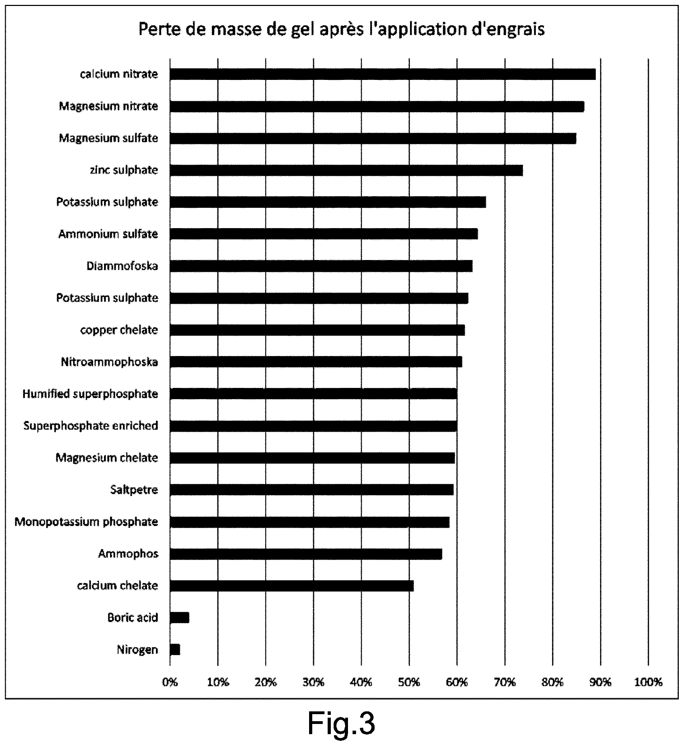

Les résultats sont synthétisés dans la figure 3.

Comme observé dans la figure 3, tous les engrais du marché entrainent entre 50% et 90% de perte de masse de l'hydrogel sauf l'acide borique (environ 4%) et surtout l'azote pur qui n'entraine une perte de masse que de l'ordre d'environ 2%.

## Revendications

1. Composition fertilisante hydro-rétentrice comprenant :
- un hydrogel comprenant un copolymère de polyacrylate et d'acrylamides de potassium ; et
- au moins un engrais azoté pur.

2. Composition selon la revendication 1, comprenant
- entre 60 et 95%, de préférence entre 70 et 95%, plus préférentiellement entre 80 et 95% en poids d'un hydrogel comprenant un copolymère de polyacrylate et d'acrylamides de potassium ; et
- entre 5 et 40%, de préférence entre 5 et 20%, plus préférentiellement entre 5 et 10% en poids d'au moins un engrais azoté pur.

3. Composition selon l'une quelconque des revendications 1 à 2, dans laquelle le au moins un engrais azoté pur est sélectionné dans le groupe comprenant l'urée, le sulfate d'ammonium, Nitrate d'ammonium, Nitrate de sodium, Ammoniac anhydre, Nitrate d'urée, Urée formaldéhyde, Ammoniac liquide (solution d'ammoniac dans l'eau), Anhydride ammoniacal, ou un mélange de ceux-ci.

4. Composition selon l'une quelconque des revendications 1 à 3, dans laquelle ladite composition comprend moins de 1% en poids d'engrais phosphatés et/ou d'engrais potassiques, de préférence ne comprend pas d'engrais phosphatés et/ou d'engrais potassiques.

5. Composition selon l'une quelconque des revendications 1 à 4, dans laquelle l'hydrogel et/ou le au moins un engrais azoté pur est sous forme de granulés.

6. Composition selon la revendication 5, dans laquelle la granulométrie des granulés d'hydrogel et/ou des granulés d'au moins un engrais azoté pur est comprise entre 0,5 et 5 mm, de préférence entre 0,5 et 3 mm, plus préférentiellement entre 0,8 et 2 mm.

7. Composition selon l'une quelconque des revendications 5 à 6, dans laquelle l'hydrogel et le au moins un engrais azoté pur sont sous forme de granulés ; et lesdits granulés d'hydrogel et lesdits granulés d'au moins un engrais azoté ont une granulométrie égale ou une granulométrie qui diffère de moins de 10%, de préférence de moins de 5%, plus préférentiellement de moins de 1%.

8. Procédé de fabrication d'une composition fertilisante hydro-rétentrice comprenant un hydrogel comprenant un copolymère de polyacrylate et d'acrylamides de potassium ; et au moins un engrais azoté pur, comprenant les étapes suivantes :
- fournir un hydrogel comprenant un copolymère de polyacrylate et d'acrylamides de potassium sous forme de granulés de granulométrie comprise entre 0,5 et 5 mm ;
- fournir au moins un engrais azoté pur comprenant un copolymère de polyacrylate et d'acrylamides de potassium sous forme de granulés de granulométrie comprise entre 0,5 et 5 mm ;
- mélanger les granulés d'hydrogel et d'au moins un engrais azoté pur.

9. Procédé de fabrication selon la revendication 8, dans lequel les granulés d'hydrogel et d'au moins un engrais azoté pur sont mélangés pour former un mélange final comprenant :
- entre 60 et 95%, de préférence entre 70 et 95%, plus préférentiellement entre 80 et 95% en poids d'un hydrogel comprenant un copolymère de polyacrylate et d'acrylamides de potassium ; et
- entre 5 et 40%, de préférence entre 5 et 20%, plus préférentiellement entre 5 et 10% en poids d'au moins un engrais azoté pur.

10. Utilisation de la composition selon l'une quelconque des revendications 1 à 7 comme produit rétenteur d'eau et fertilisant pour les plantes.
